# EUROPÄISCHE PATENTSCHRIFT

(11) **EP 0 835 779 B1**
(45) Veröffentlichungstag und Bekanntmachung des Hinweises auf die Patenterteilung: **16.10.2002**
(21) Anmeldenummer: 97114142.9
(22) Anmeldetag: 16.08.1997
(51) Int. Cl.: B60J 7/14

(54) **Kraftfahrzeug mit einem versenkbaren Dach**
Retractable roof for vehicle
Toit escamotable pour véhicule

(30) Priorität: 12.10.1996 DE 19642153
(43) Veröffentlichungstag der Anmeldung: 15.04.1998
(73) Patentinhaber: Wilhelm Karmann GmbH, D-49084 Osnabrück (DE); Bayerische Motoren Werke Aktiengesellschaft, 80788 München (DE)
(72) Erfinder: Quindt, Reinhard, 49088 Osnabrück (DE); Schröder, Burkhard, 48336 Sassenberg (DE)
(74) Vertreter: Busse & Busse Patentanwälte

(56) Entgegenhaltungen:
- BE-A- 368 499
- DE-C- 4 435 222
- FR-A- 733 380

## Beschreibung

Die Erfindung betrifft ein Kraftfahrzeug mit einem versenkbaren Dach gemäß dem Oberbegriff des Anspruchs 1, das in ein vorderes, ein mittleres und ein rückwärtiges Teilstück unterteilt ist.

Bei einem bekannten Kraftfahrzeug dieser Art (gemäß DE-C-874 860) ist ein dreiteiliges Verdeck vorgesehen, dessen vorderes, mittleres und rückwärtiges Dach-Teilstück jeweils als starre Schale ausgebildet ist. Nach Entriegelung einer jeweiligen Sperre wird das vordere Teilstück von Hand unter das mittlere Verdeckteil und danach diese beiden Teile unter das rückwärtige Teilstück verlagert. In dieser Packstellung ist eine 180°-Schwenkbewegung um ein am rückwärtigen Teilstück vorgesehenes Versteifungsrohr auszuführen und die Teile werden in einem heckseitigen Kofferraum eingeklappt.

Ein gemäß BE-A-368 499 bekanntes Kraftfahrzeug weist vier, jeweils als eine starre Schale ausgebildete Dach-Teilstücke auf. Bei einem von Hand schwierig und zeitaufwendig auszuführenden Öffnungsvorgang sind, ausgehend vom vorderen Schalenteil, einzelne Klappbewegungen um Scharniere auszuführen und danach können die ineinandergeklappten Teile gemeinsam zur Ablage oberhalb eines bzw. in einem heckseitigen Verdeckkasten gebracht werden, der für eine geschützte Ablage mit einem zusätzlichen Deckelteil zu verschließen ist.

Der Erfindung liegt die Aufgabe zugrunde, ein Kraftfahrzeug der eingangs genannten Art so auszubilden, daß das auch für ein viersitziges Fahrzeug geeignete dreiteilige Dach mit konstruktiv einfachen Mitteln automatisch in einem engen Bewegungsraum steuerbar ist, die Anwendung einer fest eingebauten Heckscheibe erleichtert und in Öffnungsstellung eine raumsparende Ablage im Verdeckkasten ermöglicht.

Die Erfindung löst diese Aufgabe mit einer Dachkonstruktion mit den Merkmalen des Anspruchs 1. Hinsichtlich wesentlicher weiterer Ausgestaltungsmerkmale wird auf die Ansprüche 2 bis 7 verwiesen.

Das erfindungsgemäß ausgebildete Kraftfahrzeug weist eine dreiteilige, insgesamt starre Dachkonstruktion auf, deren Dach-Teilstücke bei Verlagerung in Öffnungsstellung zum Verdeckkasten hin auf einer engen Bewegungsbahn zwangsgesteuert so verschwenkt werden können, daß das insbesondere eine feste Heckscheibe aufweisende rückwärtige Dach-Teilstück lediglich eine kreisbogenförmige Schwenkbewegung um einen karosserieseitig am Fahrzeugheckbereich befindlichen Lagerpunkt ausführt und dabei gleichzeitig die beiden vorderen Dach-Teilstücke mit einer entgegen der Fahrtrichtung verlaufenden Bewegung zur Konturinnenseite des rückwärtigen Dach-Teilstückes hin eingeschwenkt werden. Dabei wird das vordere Dach-Teilstück zwischen das obenliegende mittlere Teilstück und das rückwärtige Dach-Teilstück nach Art eines Einrollvorganges so bewegt, daß mit der danach erreichten Einrollage der starren Schalenteile eine insgesamt raumsparende Packstellung des Daches im Verdeckkasten möglich ist.

Die Steuerung dieser Öffnungs- bzw. Schließbewegung der drei starren Dach-Teilstücke erfolgt dabei über vorteilhaft wenige Gestängeteile mit einem jeweiligen randseitigen Antriebsorgan in Form eines Arbeitszylinders, so daß die Dachkonstruktion ein geringes Gewicht aufweist und die innenliegenden Gestängeteile raumsparend so angeordnet werden können, daß auch der Fahrgastinnenraum im Bereich des Daches weitgehend unbeeinflußt bleibt.

Weitere Einzelheiten und Vorteile der Erfindung ergeben sich aus der nachfolgenden Beschreibung und den Zeichnungen, die ein Ausführungsbeispiel des erfindungsgemäßen Kraftfahrzeugs mit versenkbarem Dach veranschaulichen. In der Zeichnung zeigen:
- Fig. 1: eine Seitenansicht eines Kraftfahrzeugs mit einem drei Dach-Teilstücke aufweisenden Dach in Schließstellung,

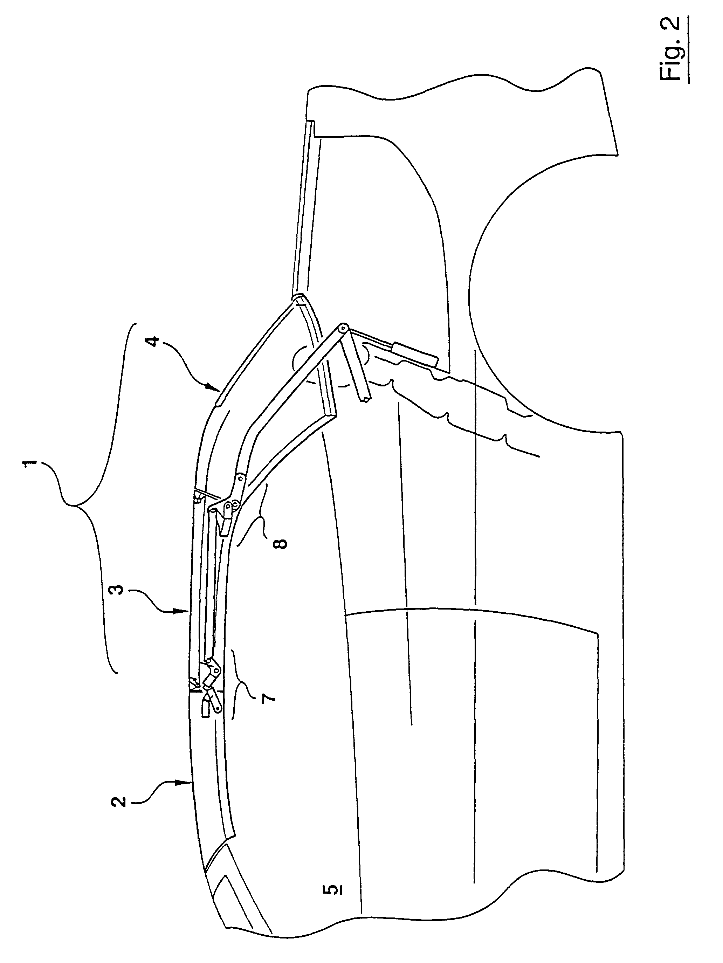

- Fig. 2: eine teilweise geschnittene Seitenansicht des Kraftfahrzeugs gemäß Fig. 1 mit der erfindungsgemäßen Verdeckkinematik,
- Fig. 3 bis 6: jeweilige Ausschnittsdarstellungen des Kraftfahrzeugs mit den Dach-Teilstücken in unterschiedlichen Bewegungsphasen bei einem Öffnungsvorgang, und
- Fig. 7: eine Ausschnittsdarstellung mit den drei Dachteilen in Ablagestellung in einem Verdeckkasten.

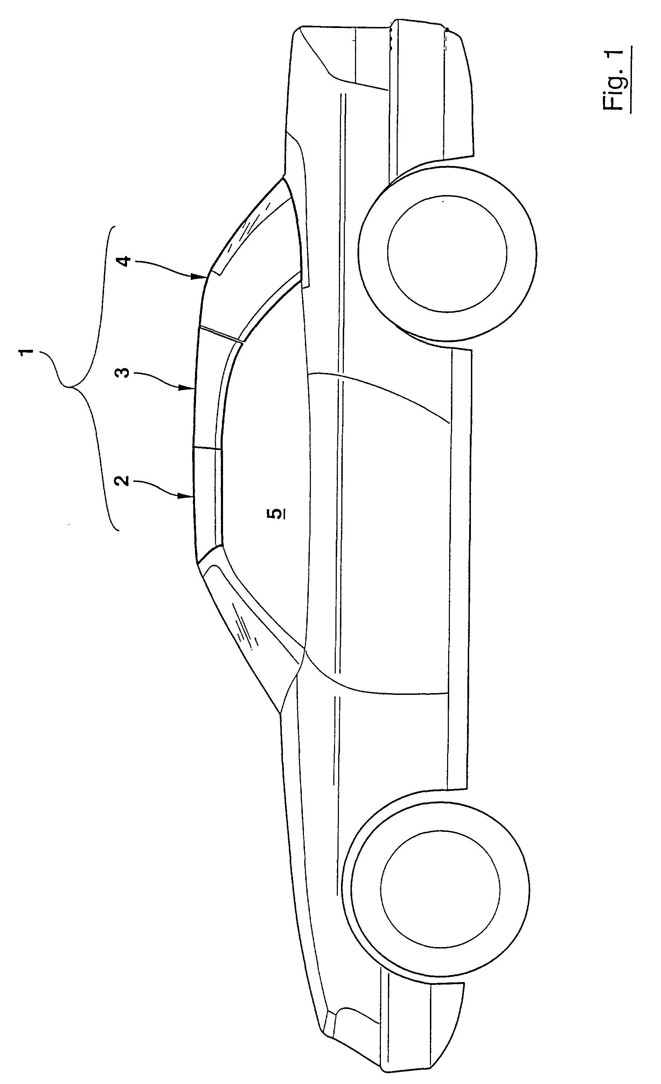

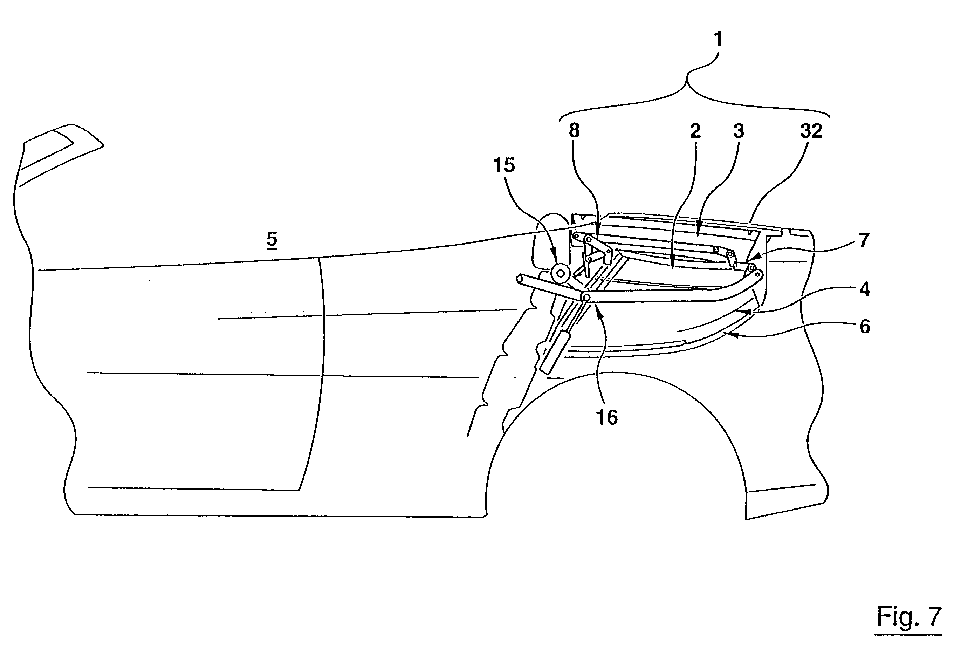

In Fig. 1 ist ein Kraftfahrzeug mit einem insgesamt mit 1 bezeichneten versenkbaren Dach dargestellt, das ein vorderes Teilstück 2, ein mittleres Teilstück 3 und ein rückwärtiges Teilstück 4 aufweist, die gemeinsam aus der dargestellten, einen Fahrzeuginnenraum 5 überdeckenden Schließstellung in eine Öffnungsstellung unter Ablage in einem heckseitigen Verdeckkasten 6 (Fig. 7) überführbar sind. Die Bauteile für diese Verdeckkinematik sind jeweils randseitig an den Dach-Teilstücken 2, 3, 4 symmetrisch zur Fahrzeuglängsachse angeordnet, so daß damit die nachfolgend für jeweils eine Fahrzeugseite dargestellten und beschriebenen Bauteile mit gegenüberliegenden Teilen korrespondieren.

Das erfindungsgemäß ausgebildete Kraftfahrzeug weist ein Dach 1 auf, dessen vorderes 2, mittleres 3 und rückwärtiges Dach-Teilstück 4 jeweils als eine an sich starre Schale ausgeführt sind, die über zwischenliegende Gelenkverbinder 7, 8 miteinander verbunden sind.

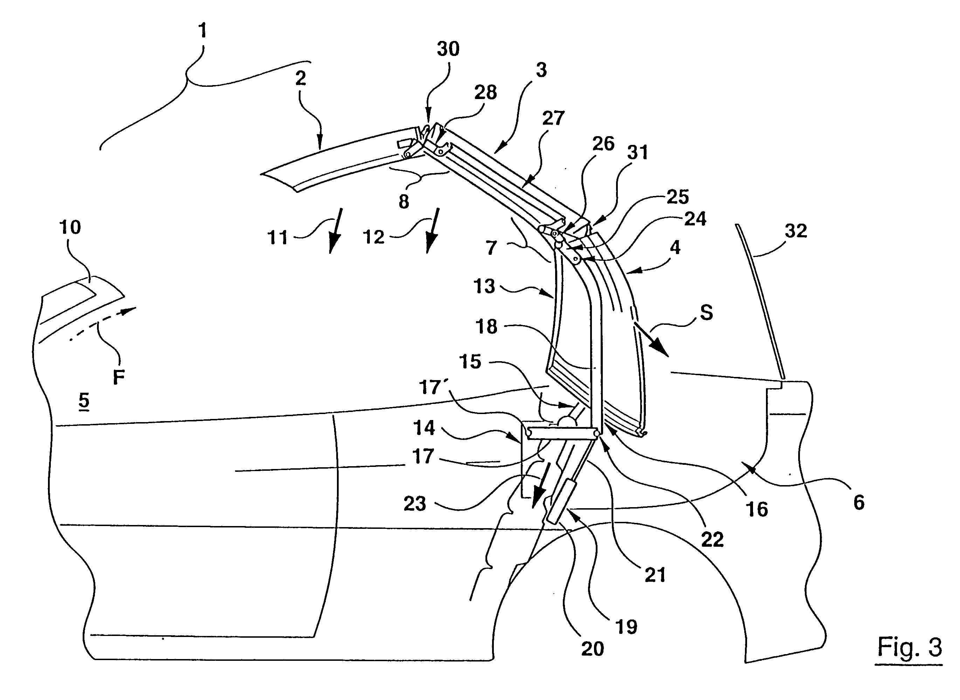

Die unterschiedlichen Bewegungsphasen gemäß Fig. 3 bis 7, mit denen beispielhaft die Verlagerung des Daches 1 zum Verdeckkasten 6 (Fig. 7) hin dargestellt ist, verdeutlichen, daß die drei Dach-Teilstücke 2, 3, 4 bei diesem Öffnungsvorgang zunächst gemeinsam entgegen der Fahrtrichtung verschwenkbar sind (Pfeil F, Fig. 3), so daß das vordere Dach-Teilstück 2 vom Windschutzscheibenrahmen 10 abgehoben wird. Danach sind das vordere Dach-Teilstück 2 und das mittlere Dach-Teilstück 3 jeweils gegensinnig in Bezug auf das rückwärtige Dach-Teilstück 4 mit einer synchronen Einrollbewegung (Pfeilrichtungen 11 und 12) zur Innenseite 13 des rückwärtigen Dach-Teilstückes 4 hin verlagerbar, das seinerseits in einer Pfeilrichtung S zum Verdeckkasten 6 hin schwenkt. Mit dem Erreichen einer Endstellung dieser Einrollbewegung sind sonach alle drei Dach-Teilstücke 2, 3, 4 in der Packstellung gemäß Fig. 7 im Verdeckkasten 6 abgelegt.

Für eine automatische, zwangsgesteuerte Ausführung des vorbeschriebenen Öffnungsvorganges (der sich in umgekehrter Bewegungsabfolge beim Schließvorgang des Daches 1 wiederholt) ist das rückwärtige Dach-Teilstück 4 im Bereich eines karosserieseitigen Hauptlagers 14 sowohl über einen Schwenkansatz 15 als auch eine in dessen Nahbereich vorgesehene zweiteilige Gestängeeinheit 16 abgestützt, wobei diese anderenends im Bereich des ersten Gelenkverbinders 7 an das mittlere Dach-Teilstück 3 gekoppelt ist.

In der dargestellten Ausführungsform ist die Gestängeeinheit 16 mit einem einen Gelenkpunkt 17' am Hauptlager 14 bildenden Schwenkschenkel 17 und einem Antriebshebel 18 versehen, in deren Bereich ein karosserieseitig abgestütztes Antriebsorgan 19 zur Einleitung der Zwangssteuerung vorgesehen ist. In zweckmäßiger Ausführung ist das Antriebsorgan 19 von einem Hydraulikzylinder 20 gebildet dessen Kolbenstange 21 in einem Verbindungsgelenk 22 an der Gestängeeinheit 16 angreift.

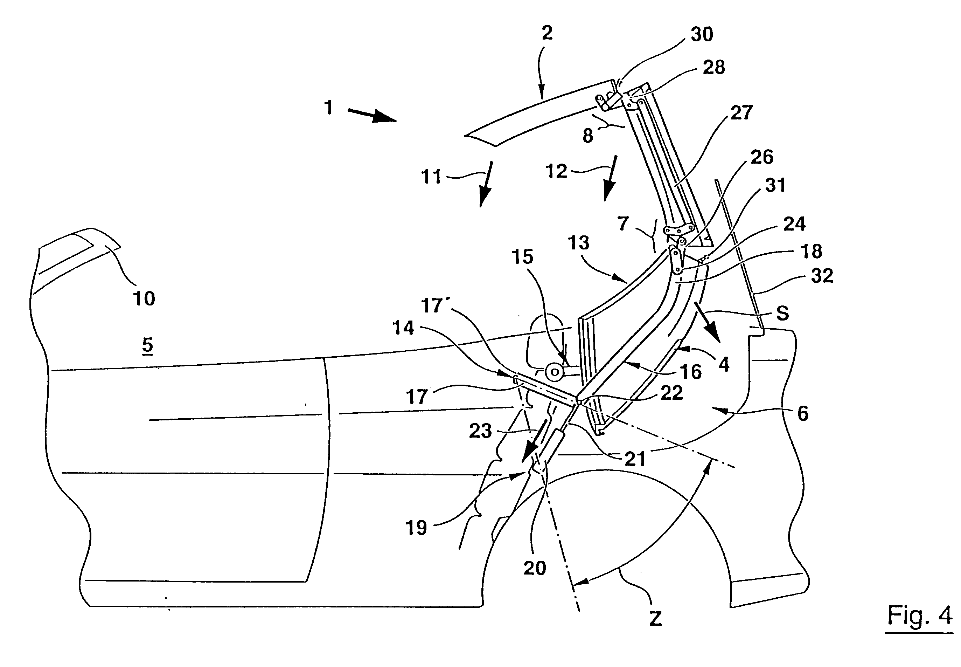

Mit dieser Antriebskinematik erfolgt der phasenweise dargestellte Öffnungsvorgang, wobei der Antriebshebel 18 bei Einleitung des Öffnungsvorganges (Fig. 3) mittels einer Zugbewegung des Hydraulikzylinders 20 (Pfeil 23; Schwenkstellung Z in Fig. 4) eine vom Schwenkhebel 17 gesteuerte, kreisbogenförmige Bahnkurve durchläuft, das rückwärtige Dach-Teilstück 4 eine dazu synchrone Schwenkbewegung ausführt (Pfeil S) und gleichzeitig die beiden vorderen Dach-Teilstücke 2, 3 mittels des Antriebshebels 18 im Bereich ihrer Gelenkverbinder 7, 8 so gesteuert werden, daß die vorbeschriebene Einrollbewegung (Pfeile 11, 12) zur Innenseite 13 des rückwärtigen Dach-Teilstückes 4 hin erfolgt.

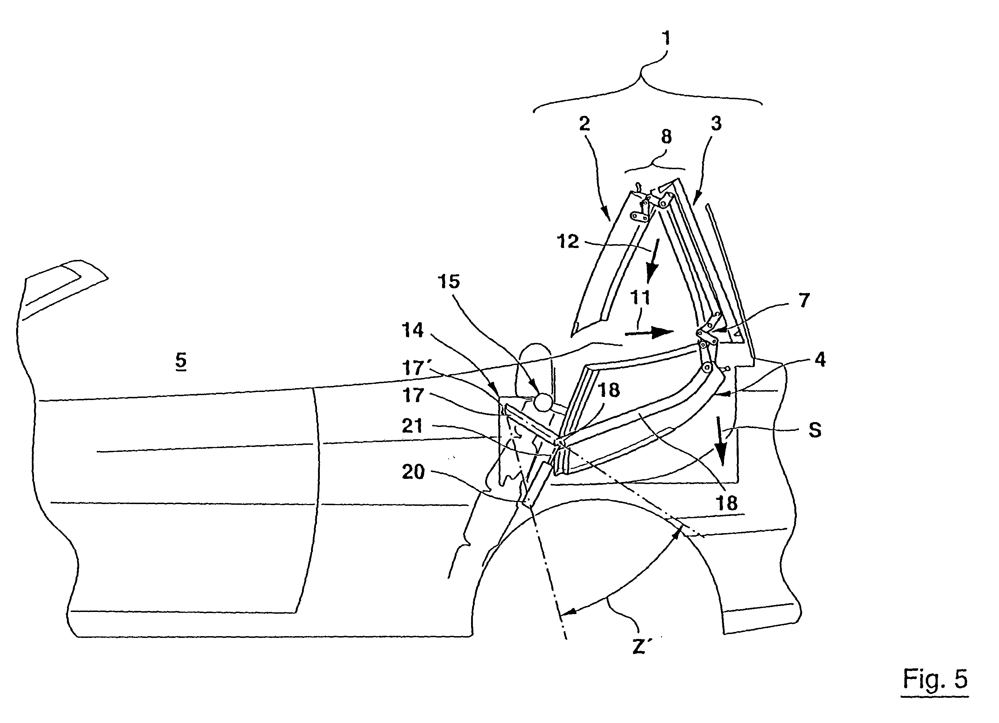

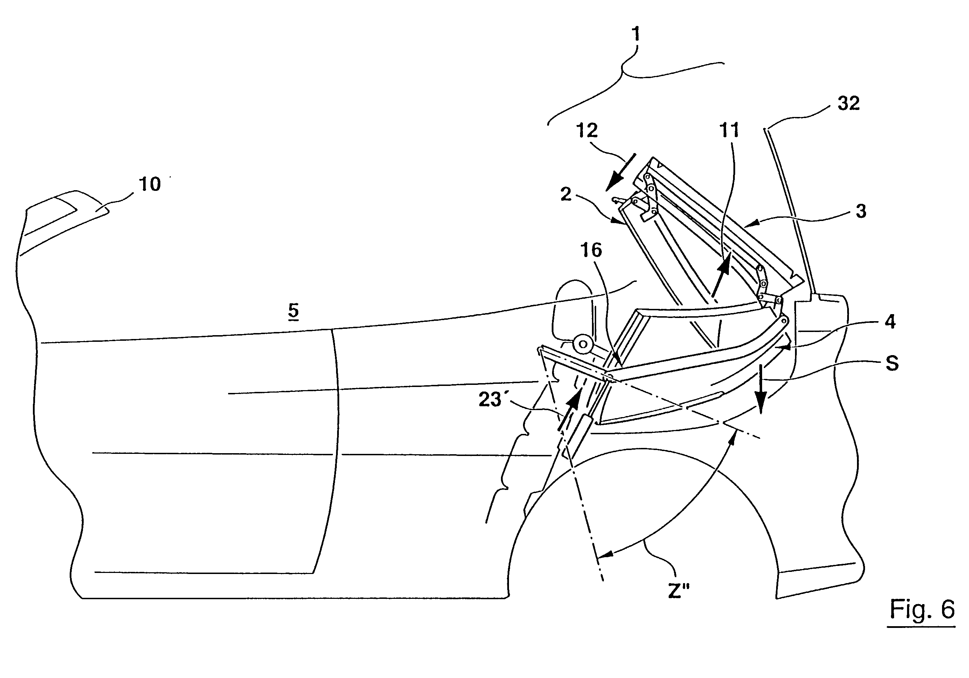

Nach Erreichen einer ersten Bewegungsstellung Z' gemäß Fig. 5 (die Dachteile sind oberhalb des Verdeckkastens 6 positioniert) erfolgt eine Umsteuerung der Arbeitsrichtung des Hydraulikzylinders 20 (Pfeil 23', Fig. 6) und bis zum Erreichen der Packstellung wird nunmehr das vordere Dach-Teilstück 2 zwischen die weiter einrollenden Dach-Teilstücke 3 und 4 eingelegt (Stellung Z'', Fig. 6).

Für diesen Bewegungsvorgang des Daches 1 ist der Antriebshebel 18 im Bereich des ersten Gelenkverbinders 7 an einem einen Gelenkpunkt 24 bildenden Schwenkhebel 25 mit Ansatzteilen angelenkt, mittels der über einen Zwischenhebel 26 eine gelenkige Verbindung zu einer zum zweiten Gelenkverbinder 8 gerichteten Schwingstange 27 geschaffen ist. Die Schwingstange 27 greift ihrerseits über einen Winkelhebel 28 mit Ansatzteilen gelenkig am vorderen Dach-Teilstück 2 an, so daß mit diesen Gelenkverbindern 7, 8 eine konstruktiv einfache und störrunanfällige Antriebseinheit für das Dach 1 geschaffen ist, die eine zuverlässige Steuerung des Daches 1 auch bei einem viersitzigen Fahrzeug ermöglicht.

Zur Stabilisierung der Dachteile 2, 3, 4 in ihrer gemeinsamen Schließstellung (Fig. 1) sind im Bereich der Gelenkverbinder 7, 8 jeweilige Rastverbinder 30, 31 vorgesehen, die in zweckmäßiger Ausführung über die Hebelbauteile im Bereich der Gelenkverbinder steuerbar sind.

In zweckmäßiger Ausführung ist der Verdeckkasten 6 mit einem Deckelteil 32 versehen, das nach dem Einlegen in die Packstellung oberhalb des mittleren Dach-Teilstückes 3 den Verdeckkasten 6 verschließt (Fig. 7).

## Patentansprüche

1. Kraftfahrzeug mit einem versenkbaren Dach (1), das in ein vorderes (2), ein mittleres (3) und ein rückwärtiges Teilstück (4) unterteilt ist, die aus einer gemeinsamen, den Fahrzeuginnenraum (5) überdeckenden Schließstellung in eine Öffnungsstellung unter Ablage in einem heckseitigen Verdeckkasten (6) überführbar sind, wobei das vordere (2), das mittlere (3) und das rückwärtige Dach-Teilstück (4) als starre Schale ausgeführt und über Gelenkverbinder (7, 8) miteinander verbunden sind, **dadurch gekennzeichnet, daß** das rückwärtige Dach-Teilstück (4) über eine Gestängeeinheit (16) schwenkbeweglich an einem karosserieseitigen Hauptlager (14) abgestützt ist, an diesem ein an der Gestängeeinheit (16) angreifendes Antriebsorgan (19) vorgesehen ist und die drei Dach-Teilstücke (2, 3, 4) zwangsgesteuert sind, derart, daß in der Öffnungsstellung das vordere Dach-Teilstück (2) unter das mittlere Dach-Teilstück (3) gegensinnig eingeschwenkt ist und beide über dem zurückgeschwenkten rückwärtigen Dach-Teilstück (4) in der Packstellung eine Abdeckung des Verdeckkastens (6) bilden.

2. Kraftfahrzeug nach Anspruch 1, **dadurch gekennzeichnet, daß** das mittlere Dach-Teilstück (3) und das vordere Dach-Teilstück (2) jeweils gegensinnig klappbar im Bereich zugeordneter Gelenkverbinder (7, 8) gehalten sind, das rückwärtige Dach-Teilstück (4) seinerseits im Bereich des karosserieseitigen Hauptlagers (14) über einen Schwenkansatz (15) abgestützt ist, in dessen Nahbereich einenends eine zweiteilige Gestängeeinheit (16) gelagert ist und diese anderenends im Bereich des ersten Gelenkverbinders (7) angreift.

3. Kraftfahrzeug nach Anspruch 1 oder 2, **dadurch gekennzeichnet, daß** das Dach (1) im Bereich der einen Schwenkschenkel (17) und einen Antriebshebel (18) aufweisenden Gestängeeinheit (16) mit dem karosserieseitig abgestützten Antriebsorgan (19) versehen ist.

4. Kraftfahrzeug nach einem der Ansprüche 1 bis 3, **dadurch gekennzeichnet, daß** als Antriebsorgan (19) ein Hydraulikzylinder (20) vorgesehen ist, dessen Kolbenstange (21) in einem Verbindungsgelenk (22) von Schwenkschenkel (17) und Antriebshebel (18) an der Gestängeeinheit (16) angreift.

5. Kraftfahrzeug nach einem der Ansprüche 1 bis 4, **dadurch gekennzeichnet, daß** der Antriebshebel (18) bei Einleitung des Öffnungsvorganges am antriebsseitigen Ende mittels einer Zugbewegung des Hydraulikzylinders (20) eine vom Schwenkhebel (17) gesteuerte, kreisbogenförmige Bahnkurve durchläuft und die drei Dach-Teilstücke (2, 3, 4) eine erste Einrollstellung oberhalb des Verdeckkastens (6) verlagert werden und danach über eine Umkehr der Bewegungsrichtung des Hydraulikzylinders (20) das rückwärtige Dach-Teilstück (4) unter das vordere (2) und das mittlere Dach-Teilstück (3) in einer kompakten Einrollage in die Packstellung einschwenkbar sind.

6. Kraftfahrzeug nach einem der Ansprüche 1 bis 5, **dadurch gekennzeichnet, daß** der Antriebshebel (18) im Bereich des ersten Gelenkverbinders (7) an einem einen Gelenkpunkt (24) bildenden Schwenkhebel (25) angreift, der seinerseits über einen Zwischenhebel (26) gelenkig mit einer zum zweiten Gelenkverbinder (8) gerichteten Schwingstange (27) verbunden ist, die über einen Winkelhebel (28) gelenkig am vorderen Dach-Teilstück (2) angreift.

7. Kraftfahrzeug nach einem der Ansprüche 1 bis 6, **dadurch gekennzeichnet, daß** im Bereich der Gelenkverbinder (7, 8) jeweils ein Rastverbinder (30, 31) vorgesehen ist.

## Claims

1. Motor Vehicle with a roof (1) capable of being retracted which is divided into a front- (2), central- (3) and a rear element (4) which may be converted from a common closed position situated above the interior of the motor vehicle (5) into an open position by lowering it into a rear-located roof-compartment (6) whereby the front (2), central (3) and rear roof element (4) have the form of a rigid panel and are connected together by linkage assemblies (7, 8)
**characterised in that** the rear element (4) is supported by a framework member (16) in a manner allowing it to rotate about a main bearing (14) attached to the coachwork where an actuating element (19) attached to the main bearing engages with the framework member (16) and where the three roof-elements, (2, 3, 4) are constrained to move in such a manner that when in the open position the front roof-element (2) is swept in an opposing direction under the central roof-element (3) and that both, when packed together with the swung-back rear roof-element (4) form a covering for the roof compartment (6).

2. Motor vehicle in accordance with claim 1, **characterised in that** the central roof-element (3) and the front roof-element (2) are respectively capable of being supported in the area of the appropriate linkage assembly (7, 8) and of being folded in a reverse direction while for its part the rear roof-element (4) in the area of the main bearing (14) attached to the coachwork is supported by a pivoting projection (15) close to which one end of a two-component framework element (16) is carried in a bearing and the other end engages in the area of the first linkage assembly (7).

3. Motor vehicle in accordance with claims 1 or 2, **characterised in that** the roof (1) in the area of the frame member (16) exhibiting a pivoting element (17) and an actuating lever (18) is provided with an actuating device (19) attached to the coachwork.

4. Motor vehicle in accordance with one of the claims 1 to 3, **characterised in that a** hydraulic cylinder (20) is provided as the actuating device (19), the piston rod (21) of which engages with a connecting linkage (22) joining the pivoting element (17) and the actuating lever (18) to the framework element (16).

5. Motor vehicle in accordance with one of the claims 1 to 4 **characterised in that** when the opening sequence is initiated by a pulling action from the hydraulic cylinder (20) the actuating end of the actuating lever (18) moves through an arc-shaped curve controlled by the pivoting element (17) and the three roof-elements (2, 3, 4) are capable of being re-assembled into a first roll-up position above the roof compartment (6) and subsequently, as a result of a reverse movement by the hydraulic cylinder (20), the rear roof-element (4) can be swung under the front (2) and the central (3) roof element into the packed position in a compact arrangement.

6. Motor vehicle in accordance with one of the claims 1 to 5 **characterised in that** in the area of the first linkage assembly (7) the actuating lever (18) engages with a swivelling lever (25) forming a linkage point (24), which for its part is articulated via an intermediate lever (26) with a swivelling bar (27) directed towards a second linkage assembly (8) and which engages via an angle-lever (28) with the front roof-element (2).

7. Motor vehicle in accordance with one of the claims 1 to 6, **characterised in that** a snap-in locking device (30, 31) is provided in each of the linkage assembly areas (7, 8).

## Revendications

1. Véhicule automobile comportant un toit escamotable (1) qui est divisé en une section avant, une section intermédiaire et une section arrière qui peuvent passer d'une position commune de fermeture recouvrant l'espace intérieur (5) du véhicule à une position d'ouverture avec rangement dans un compartiment de capote situé du côté de la partie arrière, la section avant (2), la section intermédiaire (3) et la section arrière (4) du toit étant exécutées en tant que coque rigide et étant raccordées mutuellement par des dispositifs d'assemblage articulés (7, 8), **caractérisé en ce que** la section de toit arrière (4) s'appuie, tout en étant mobile pour un pivotement, par l'intermédiaire d'une unité à tringles (16) sur un support principal (14) situé du côté de la carrosserie, **en ce que** sur celui-ci un organe d'entraînement (19) agissant sur l'unité à tringles (16) est prévu et **en ce que** les trois sections de toit (2, 3, 4) font l'objet d'une commande forcée de sorte que dans la position d'ouverture on ait fait pivoter la section de toit avant (2) à l'intérieur au-dessous de la section de toit intermédiaire (3) en sens inverse et les deux sections forment un recouvrement de compartiment de capote (6) sur la section de toit arrière (4) qu'on a fait repivoter, dans la position d'empilement.

2. Véhicule automobile selon la revendication 1, **caractérisé en ce que** la section de toit intermédiaire (3) et la section de toit avant (2) sont chacune maintenues de façon à être pliables en sens inverse dans la zone des dispositifs d'assemblage articulés (7, 8) associés, **en ce que** la section de toit arrière (4) de son côté s'appuie dans la zone du support principal (14) situé du côté de la carrosserie via un appendice de pivotement (15) dans la zone proche duquel une unité à tringles (16) en deux parties est montée à une extrémité et **en ce que** cette unité agit à l'autre extrémité dans la zone du premier dispositif d'assemblage articulé (7).

3. Véhicule automobile selon la revendication 1 ou 2 **caractérisé en ce que** le toit (1) est pourvu dans la zone de l'unité à tringles (16) présentant une aile de pivotement (17) et un levier d'entraînement (18), de l'organe d'entraînement (19) s'appuyant du côté de la carrosserie.

4. Véhicule automobile selon l'une quelconque des revendications 1 à 3 **caractérisé en ce qu'**un vérin hydraulique (20) est prévu comme organe d'entraînement (19), vérin dont la tige de piston (21) agit sur l'unité à tringles (16) dans une articulation de raccordement (22) d'aile de pivotement (17) et de levier d'entraînement (18).

5. Véhicule automobile selon l'une quelconque des revendications 1 à 4, **caractérisé en ce que** le levier d'entraînement (18) lors de l'amorce de l'opération d'ouverture parcourt en son extrémité située du côté de l'entraînement une courbe de trajectoire en forme d'arc de cercle commandée par le levier de pivotement (17) au moyen d'un mouvement de traction du vérin hydraulique (20) et **en ce que** les trois sections de toit (2, 3, 4) sont déplacées en une première position d'enroulement au-dessus du compartiment de capote (6) et **en ce qu'**ensuite par une inversion du sens du mouvement du vérin hydraulique on peut faire pivoter la section de toit arrière (4) au-dessous de la section de toit avant (2) et de la section de toit intermédiaire (3) en un état d'enroulement compact dans la position d'empilement.

6. Véhicule automobile selon l'une quelconque des revendications 1 à 5 **caractérisé en ce que** le levier d'entraînement (18) agit dans la zone du premier dispositif d'assemblage articulé (7) sur un levier de pivotement (25) formant un point d'articulation (24), lequel est raccordé de son côté via un levier intermédiaire (26) par articulation à une tringle articulée (27) dirigée vers le second dispositif d'assemblage articulé (8), qui agit via un levier en forme de coin (28) par articulation sur la partie de toit avant (2).

7. Véhicule automobile selon l'une quelconque des revendications 1 à 6, **caractérisé en ce qu'**un dispositif d'assemblage par encliquetage (30, 31) est à chaque fois prévu dans la zone des dispositifs d'assemblage articulés (7, 8).
